# EUROPEAN PATENT APPLICATION

(11) **EP 4 651 237 A1**
(43) Date of publication of application: **19.11.2025**
(21) Application number: 23943194.3
(22) Date of filing: 21.09.2023
(51) Int. Cl.: H01M 4/62, H01M 4/13

(54) **NEGATIVE ELECTRODE SHEET, BATTERY CELL, BATTERY, AND ELECTRICAL DEVICE**

(30) Priority: 30.06.2023 CN 202310797700
(71) Applicant: Contemporary Amperex Technology Co., Limited, Ningde, Fujian 352100 (CN)
(72) Inventor: WU, Kai, Ningde, Fujian 352100 (CN); ZHUANG, Zaiyu, Ningde, Fujian 352100 (CN); ZHAO, Jinling, Ningde, Fujian 352100 (CN); ZHANG, Ming, Ningde, Fujian 352100 (CN)
(74) Representative: Ziebig Hengelhaupt Intellectual Property Attorneys Patentanwaltskanzlei PartGmbB
(86) International application number: PCT/CN2023/120359
(87) International publication number: WO 2025/000715

(57) **Abstract**

Disclosed are a negative electrode sheet, a battery cell, a battery, and an electric device. The negative electrode sheet includes a negative electrode current collector and a negative electrode film layer provided on at least one side of the negative electrode current collector. The negative electrode film layer includes a negative electrode active material and a binder, and the negative electrode active material includes a silicon-based material. An average-volume particle diameter Dv50 of the binder is 0.1-0.8 µm. The battery has relatively high energy density, power, and relatively good cycle performance.

## Description

### CROSS REFERENCE

The present application claims priority to Chinese Patent Application No. 202310797700.7, filed with the China National Intellectual Property Administration on June 30, 2023 and entitled "Negative Electrode Sheet, Battery Cell, Battery, and Electric device", the entire disclosure of which is incorporated herein by application.

### TECHNICAL FIELD

The present application relates to the field of battery technologies, and more specifically, to a negative electrode sheet, a battery cell, a battery, and an electric device.

### BACKGROUND

In recent years, lithium-ion batteries are used in wider fields, for example, the energy storage power field such as wind power, hydropower, thermal power generation, and solar power plant, and a plurality of fields such as an electric bicycle, an electric motorcycle, an electric vehicle, military equipment, and aerospace. While the lithium-ion batteries are greatly developed, higher requirements are put forward for various aspects of performance of the lithium-ion batteries.

Therefore, how to improve performance of the lithium-ion batteries is a problem to be resolved urgently.

### SUMMARY

The present application is made in view of the foregoing topics, and an objective of the present application is to provide a negative electrode sheet, a battery cell, a battery, and an electric device. The battery has relatively high energy density, power, and relatively good cycle performance.

According to a first aspect, a negative electrode sheet is provided, comprising a negative electrode current collector and a negative electrode film layer provided on at least one side of the negative electrode current collector. The negative electrode film layer comprises a negative electrode active material and a binder, and the negative electrode active material comprises a silicon-based material. An average-volume particle diameter Dv50 of the binder is 0.1-0.8 µm.

In this example of the present application, the negative electrode sheet comprises the negative electrode film layer. Further, the negative electrode film layer comprises the negative electrode active material and the binder. Further, the negative electrode active material comprises the silicon-based material. The average-volume particle diameter Dv50 of the binder is 0.1-0.8 µm. The silicon-based material and the binder are added to the negative electrode film layer. The silicon-based material has a relatively high theoretical specific capacity, and helps improve energy density of a battery. In addition, the silicon-based material is a relatively hard material, and is not easy to be crushed when being cold pressed. In addition, the shape of a particle is irregular, and there is a specific gap between particles. Therefore, the negative electrode sheet comprising the silicon-based material usually has relatively large porosity. A binder whose average-volume particle diameter Dv50 is 0.1-0.8 µm is added to the negative electrode film layer, to not only increase active binding sites, but also effectively fill and bind a large pore region of the electrode sheet, improve a binding force to suppress severe volume expansion of the silicon-based material in a battery cycling process, maintain stability of an active material in the cycling process, and minimize a use amount of the binder, thereby improving cycle performance and power of the battery, so that the battery has relatively high energy density, power, and relatively good cycle performance.

In a possible embodiment, the average-volume particle diameter Dv50 of the binder is 0.1-0.5 µm, and optionally, the average-volume particle diameter Dv50 of the binder is 0.1-0.3 µm.

In this example of the present application, a binder whose average-volume particle diameter Dv50 is 0.1-0.8 µm is added to the negative electrode film layer, to suppress volume expansion of the silicon-based material in the battery cycling process. Further, the average-volume particle diameter Dv50 of the binder is 0.1-0.5 µm, particularly, 0.1-0.3 µm, to further improve a binding force between negative electrode active materials, thereby further improving cycle stability of the negative electrode active material in the cycling process, and obtaining a battery with a high binding force, high power, high energy density, and long cycle performance.

In a possible embodiment, based on 100 parts by weight of the negative electrode film layer, parts by weight of the binder are 1-5 parts by weight, and optionally, parts by weight of the binder are 2-4 parts by weight.

In this example of the present application, a binder with a small particle diameter is added to the negative electrode film layer, so that the binder is filled in a large pore region of the negative electrode film layer, to suppress volume expansion of the silicon-based material in the battery cycling process. A mass proportion of the binder at the negative electrode film layer ranges from 1% to 5%, particularly, from 2% to 4%, to not only improve the binding force between negative electrode active materials to suppress volume expansion of the negative electrode sheet, but also reduce a decrease in energy density of the battery due to a too high content of the binder.

In a possible embodiment, the porosity of the negative electrode sheet ranges from 15% to 60%, and optionally, the porosity of the negative electrode sheet ranges from 20% to 45%.

In this example of the present application, a theoretical capacity of the silicon-based material is relatively high. Therefore, when the silicon-based material is selected as the negative electrode active material for the battery, the battery has relatively high energy density. However, for the silicon-based material, if the porosity of the negative electrode sheet is too large, and the negative electrode sheet undergoes a severe volume expansion effect in the battery cycling process, binding and electrical contact between negative electrode active materials deteriorate. The porosity of the negative electrode sheet ranges from 15% to 60%, particularly, from 20% to 45%, to not only help the battery have relatively good energy density and fast charging performance, but also reduce deterioration of binding and electrical contact between negative electrode active materials due to too large porosity.

In some embodiments, the binder comprises a hydrophilic group; and optionally, the hydrophilic group comprises at least one of a sulfonic acid group, a phosphate group, a hydroxyl group, a carboxyl group, an amide group, an amino group, an aldehyde group, a carbonyl group, a cyano group, or an anhydride.

In this example of the present application, a binder whose average-volume particle diameter Dv50 is 0.1-0.8 µm is added to the negative electrode sheet, to improve a binding force of the negative electrode sheet to suppress severe volume expansion of the silicon-based material in the battery cycling process. However, if a particle diameter of the binder is relatively small, binder floating of the binder easily occurs in a coating and drying process of slurry, and consequently, the binder cannot play a binding action. Therefore, the binder comprises at least one of the sulfonic acid group, the phosphate group, the hydroxyl group, the carboxyl group, the amide group, the amino group, the aldehyde group, the carbonyl group, the cyano group, or the anhydride, and these hydrophilic groups can increase an interaction force between the binder and each of the silicon-based material or a graphite material, thereby effectively modifying binder floating of a binder with a small particle diameter in a coating and drying process of the electrode sheet, prompting uniform retention of the binder in a gap of the silicon-based material, and effectively improving cohesion of the negative electrode sheet.

In some embodiments, the silicon-based material comprises at least one of the following functional groups: a carboxyl group, a hydroxyl group, an aldehyde group, and a carbonyl group.

In this example of the present application, the silicon-based material comprises at least one functional group in the carboxyl group, the hydroxyl group, the aldehyde group, and the carbonyl group, and these functional groups may interact with a monomer or a functional group in the binder, to enhance a binding effect between the silicon-based material and the binder.

In some embodiments, the specific surface area SSA of the silicon-based material satisfies 2 m²/g≤SSA≤10 m²/g, optionally, 2 m²/g≤SSA≤4 m²/g.

In this example of the present application, the specific surface area of the silicon-based material falls within the foregoing range, to further enhance a binding action between the silicon-based material and the binder, and dynamic performance of a material is relatively good, to facilitate initial coulombic efficiency of the battery.

In a possible embodiment, the average-volume particle diameter Dv50 of the silicon-based material is 5-20 µm, and optionally, the average-volume particle diameter Dv50 of the silicon-based material is 8-15 µm.

In this example of the present application, the average-volume particle diameter Dv50 of the silicon-based material is 5-20 µm, particularly, 8-15 µm, to not only enable the negative electrode sheet to have relatively large porosity to improve fast charging performance of the battery, but also reduce a decrease in a binding force between negative electrode active materials due to a too large particle diameter of the silicon-based material.

In some embodiments, the silicon-based material comprises: carbon matrix particles, where the carbon matrix particle comprises a three-dimensional network cross-linked pore structure; and silicon-based nanoparticles, where at least some of the silicon-based nanoparticles are disposed in the three-dimensional network cross-linked pore structure.

In this example of the present application, the carbon matrix particle has a stable porous skeleton structure, has a relatively strong supporting capability, exhibits a relatively high stress capability, and has excellent mechanical performance and electrical conductivity. The carbon matrix particle comprises a three-dimensional network cross-linked pore structure, has relatively large space available for disposing the silicon-based nanoparticle, and may be used for storing a large amount of silicon. When the porous carbon matrix particle is composited with the silicon-based nanoparticle, silicon-based nanoparticles are not easy to aggregate, and can be uniformly dispersed in pores of the carbon matrix particle. After the carbon matrix particle is composited with the silicon-based nanoparticle, electrical conductivity of a silicon-carbon composite material may be improved, a volume effect of silicon in a lithium deintercalation/intercalation process is alleviated, a stress change of the silicon-based nanoparticle can be fully withstood, structural stability of the silicon-carbon composite material is improved, and cycle stability and a lithium storage capacity of the silicon-carbon composite material are improved. Therefore, when the silicon-carbon composite material is used in the battery, cycle performance and energy density of the battery are improved.

In a possible embodiment, when a test is made in a gas adsorption/desorption method, the total pore volume of pores whose pore diameter is greater than 100 nm in the carbon matrix particle is denoted by V1 cm³/g, and V1≥0.01, and optionally, 0.01≤V1≤0.5; and/or when a test is made in a gas adsorption/desorption method, the total pore volume of pores whose pore diameter is less than or equal to 100 nm in the carbon matrix particle is denoted by V2 cm³/g, and V2≥0.05, and optionally, 0.05≤V2≤1.1.

In this example of the present application, when the porosity of the carbon matrix particle falls within the foregoing range, pores occupy a proper volume in a skeleton, to not only improve stability of a skeleton structure, but also satisfy a capacity of silicon deposition. The silicon-based nanoparticle is attached in the pore, and the silicon-based nanoparticle and the porous carbon matrix particle may act synergistically, to improve a capacity and electrical conductivity of the silicon-carbon composite material.

In a possible embodiment, the silicon-based material comprises at least one of a silicon-carbon material, or a composite of a silicon-carbon material and a silicon-oxygen material.

In this example of the present application, the silicon-based material, particularly the silicon-carbon material or the composite of the silicon-oxygen material and the silicon-oxygen material, is added to the negative electrode active material, to help improve energy density of the battery.

In a possible embodiment, the silicon-oxygen material comprises SiOₓ, and 0.4≤x≤1.6.

In this example of the present application, the silicon-oxygen material in the silicon-based material not only has a high theoretical capacity and excellent stability, but also has advantages such as low costs, non-toxicity, and environmental friendliness. The silicon-oxygen material, particularly SiOₓ is used, and 0.4≤x≤1.6, to further improve performance of the battery.

In a possible embodiment, the silicon-carbon material comprises a silicon-carbon composite; and the ratio of a mass content B of a carbon element in the silicon-carbon composite to a mass content A of a silicon element in the silicon-carbon composite is 1.3≤B/A≤2 based on the total mass of the silicon-carbon composite.

In this example of the present application, the silicon-carbon material has a relatively high theoretical capacity and relatively good cycle performance. The silicon-carbon material comprises the silicon-carbon composite. The ratio between a mass proportion A of the silicon element to the silicon-carbon composite and a mass proportion B of the carbon element to the silicon-carbon composite is 1.3≤B/A≤2, to further improve performance of the battery.

In a possible embodiment, the binder comprises at least one of a polystyrene butadiene copolymer and a modified product thereof, a polystyrene-acrylate and a modified product thereof, a polyacrylate copolymer and a modified product thereof, a polyurethane copolymer and a modified product thereof, a copolymer of butadiene and acrylonitrile and a modified product thereof, polytetrafluoroethylene and a modified product thereof, or polyvinylidene fluoride and a modified product thereof.

In this examples of the present application, at least one of a polystyrene butadiene copolymer and a modified product thereof, a polystyrene-acrylate and a modified product thereof, a polyacrylate copolymer and a modified product thereof, a polyurethane copolymer and a modified product thereof, a copolymer of butadiene and acrylonitrile and a modified product thereof, polytetrafluoroethylene and a modified product thereof, or polyvinylidene fluoride and a modified product thereof that have a relatively good binding force serves as the binder, to help further improve a binding force between the negative electrode active material and the negative electrode current collector.

In a possible embodiment, based on 100 parts by weight of the negative electrode film layer, parts by weight of the silicon-based material are 25-50 parts by weight, and optionally, parts by weight of the silicon-based material are 30-40 parts by weight.

In this example of the present application, the silicon-based material is added to the negative electrode active material, to improve energy density and rate performance of the battery. However, the larger content of the silicon-based material leads to the larger porosity of the negative electrode sheet and the worse binding force between negative electrode active materials. Therefore, the mass proportion of the silicon-based material at the negative electrode film layer ranges from 25% to 50%, particularly, from 30% to 40%, to further improve performance of the battery.

In a possible embodiment, the negative electrode active material further comprises graphite; and based on 100 parts by weight of the negative electrode film layer, parts by weight of the graphite are 45-70 parts by weight, and optionally, parts by weight of the graphite are 55-65 parts by weight.

In this example of the present application, the silicon-based material has a relatively high theoretical capacity, but has relatively poor electrical conductivity. Therefore, if only the silicon-based material is selected as the negative electrode active material of the battery, electrical conductivity of the battery is very poor. Graphite with relatively good electrical conductivity is added to the negative electrode active material, and a mass proportion of the graphite at the negative electrode film layer ranges from 45% to 70%, particularly, from 55% to 65%, to maintain relatively good cycle performance of the battery.

In a possible embodiment, the compacted density of the negative electrode sheet is 1.0-2.2 g/cm³, and optionally, the compacted density of the negative electrode sheet is 1.2-1.8 g/cm³.

In this example of the present application, the compacted density of the negative electrode sheet is 1.0-2.2 g/cm³, particularly 1.2-1.8 g/cm³, to further improve energy density of the battery.

In a possible embodiment, the thickness of the negative electrode sheet is 60-150 µm, and optionally, the thickness of the negative electrode sheet is 90-130 µm.

In this example of the present application, the thickness of the negative electrode sheet is 60-150 µm, particularly 90-130 µm, to further improve energy density of the battery.

A second aspect of the present application provides a battery cell, comprising the negative electrode sheet in any embodiment of the first aspect of the present application.

In a possible embodiment, the battery cell further comprises a positive electrode sheet. The positive electrode sheet comprises a positive electrode current collector and a positive electrode film layer provided on at least one side of the positive electrode current collector, and the positive electrode film layer comprises a positive electrode active material.

In a possible embodiment, the positive electrode active material comprises Liₓ(NiₐCo_{b}Mn_{c})_{1-d}M_{d}O_{2-y}A_{y}, M comprises at least one of Zr, Al, B, Ta, Mo, W, Nb, Sb, or La, 0.2<x≤1.2, 0.5≤a<1.0, 0≤b<0.5, 0≤c<1, 0≤d<1, and 0≤y<0.02.

A third aspect of the present application provides a battery, comprising the battery cell in the second aspect of the present application.

A fourth aspect of the present application provides an electric device, comprising the battery in the third aspect of the present application.

### DESCRIPTION OF DRAWINGS

In order to more clearly illustrate the technical solutions of the embodiments of the present application, the drawings required to be used in the embodiments of the present application will be briefly introduced below. Obviously, the drawings described below are only some embodiments of the present application. For persons of ordinary skill in the art, other drawings can also be obtained from the drawings without creative work.
FIG. 1 is a schematic structural diagram of a negative electrode sheet according to an embodiment of the present application;
FIG. 2 is a schematic diagram of a battery cell according to an embodiment of the present application;
FIG. 3 is a schematic structural diagram of a battery cell according to an embodiment of the present application;
FIG. 4 is a schematic diagram of a battery according to an embodiment of the present application;
FIG. 5 is a schematic structural diagram of a battery according to an embodiment of the present application; and
FIG. 6 is a schematic structural diagram of an electric device according to an embodiment of the present application.

### DESCRIPTION OF EMBODIMENTS

The embodiments of a negative electrode sheet, a battery cell, a battery, and an electric device according to the present application are described below in detail with appropriate reference to the accompanying drawings. However, unnecessary detailed descriptions are omitted. For example, a detailed description of well-known matters and repeated descriptions of a substantially same structure may be omitted. The accompanying drawings and the following descriptions are provided for those skilled in the art to fully understand the present application, and are not intended to limit subject matters described in the claims.

The "range" disclosed in the present application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In the present application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all examples and optional examples of the present application may be combined with each other to form new technical solutions.

Unless otherwise specified, all technical features and optional technical features of the present application can be combined with each other to form new technical solutions.

Unless otherwise specified, all steps in the present application may be performed sequentially or randomly, preferably sequentially. For example, the method includes steps (a) and (b), which indicates that the method may include sequentially performed steps (a) and (b) or may include sequentially performed steps (b) and (a). For example, the method may further include step (c), which indicates that step (c) may be added to the method in any order. For example, the method may include steps (a), (b), and (c), may include steps (a), (c), and (b), may include steps (c), (a) and (b), or the like.

A term "above", "below", "greater than", or "less than" used in the present application includes an endpoint value. For example, "at least one" means one or a plurality, and "at least one of A and B" means "A", "B" or "A and B".

Lithium-ion batteries are widely used in consumer electronics due to advantages such as relatively high energy density, power, and relatively long cycle performance. In recent years, as electric vehicles and energy storage systems continuously develop, requirements for aspects such as cycle performance and energy density of batteries are also continuously raised.

Currently, a capacity of a lithium-ion battery in which a graphite material serves as a negative electrode active material is gradually unable to satisfy a requirement of the electric vehicle for long endurance. In this case, a silicon-based material is the most potential to become a next-generation negative electrode material of the lithium-ion battery due to advantages such as a large specific capacity, a low discharge platform, and rich energy storage. However, the silicon-based material severely limits commercial application of the silicon-based material due to factors of the silicon-based material. First, the silicon-based material has relatively severe volume expansion in a battery cycling process, and a large volume change in a lithium deintercalation/intercalation process tends to cause particle pulverization, deintercalation of an active material from a negative electrode current collector, and continuous growth of an SEI film, and finally causes relatively poor cycle performance and relatively poor rate performance. Therefore, how to make a battery in which a silicon-based material is used have relatively good cycle performance and rate performance is a problem to be resolved urgently.

In view of this, the present application provides a negative electrode sheet. The negative electrode sheet includes a negative electrode current collector and a negative electrode film layer provided on at least one side of the negative electrode current collector. A silicon-based material and a binder are added to a negative electrode active material of the negative electrode film layer, and an average-volume particle diameter Dv50 of the binder is 0.1-0.8 µm, to not only increase active binding sites, but also effectively fill and bind a large pore region of the electrode sheet, improve a binding force to suppress severe volume expansion of the silicon-based material in a battery cycling process, maintain stability of an active material in the cycling process, and minimize a use amount of the binder, so that a battery has relatively good rate and cycle performance while having relatively high energy density.

A negative electrode sheet, a battery cell, a battery, and an electric device in the present application are described below with reference to the accompanying drawings.

In addition, the technical solutions of the present application are applicable to various types of batteries such as a lithium-ion battery, a lithium metal battery, and a sodium-ion battery. This is not limited in the present application. For ease of description, the lithium-ion battery is used as an example for description.

### [Negative electrode sheet]

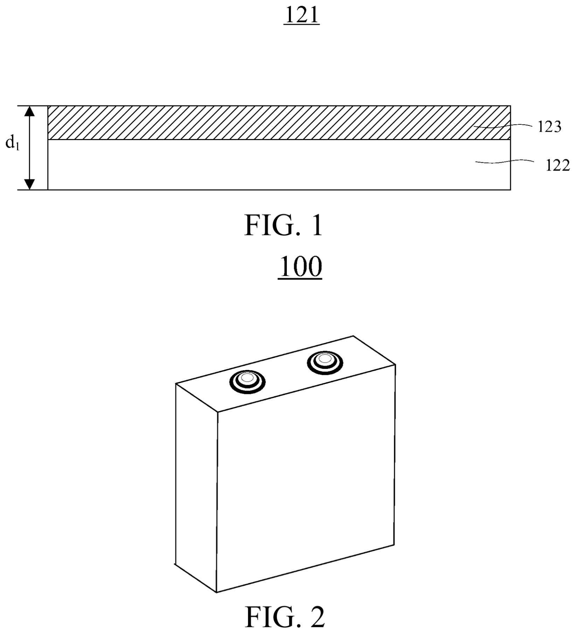

A first aspect of the present application provides a negative electrode sheet. FIG. 1 is a schematic structural diagram of a negative electrode sheet according to an embodiment of the present application. As shown in FIG. 1, a negative electrode sheet 121 includes a negative electrode current collector 122 and a negative electrode film layer 123 provided on at least one side of the negative electrode current collector 122. The negative electrode film layer 123 includes a negative electrode active material and a binder, and the negative electrode active material includes a silicon-based material. An average-volume particle diameter Dv50 of the binder is 0.1-0.8 µm.

The silicon-based material and the binder are added to the negative electrode film layer 123, and the average-volume particle diameter Dv50 of the binder is 0.1-0.8 µm, to improve a binding force of the negative electrode sheet, and reduce expansion of the negative electrode sheet, thereby improving performance of the battery.

In this example of the present application, the silicon-based material is a material grown and manufactured in different processes by using a silicon material as a substrate or a base, and includes a silicon material, a silicon-germanium material, porous silicon, microcrystalline silicon, another compound semiconductor material heterogeneously epitaxially grown by using silicon as a base, and the like that are at an insulation layer.

Usually, a battery cell includes a positive electrode sheet, a separator, a negative electrode sheet, and an electrolyte. In a charging and discharging process of the battery, active ions are intercalated and deintercalated back and forth between a positive electrode and a negative electrode. The electrolyte functions to conduct ions between the positive electrode and the negative electrode. The separator is disposed between the positive electrode and the negative electrode, to mainly prevent the positive electrode and the negative electrode from being short-circuited and allow the ion to pass.

It should be noted that the "positive electrode sheet" and the "negative electrode sheet" mentioned in this example of the present application are entireties of the positive electrode sheet and the negative electrode sheet including an active material, a current collector, or another additive.

The negative electrode sheet 121 includes the negative electrode current collector 122 and the negative electrode film layer 123 provided on at least one surface of the negative electrode current collector 122. The negative electrode film layer 123 includes the negative electrode active material.

In an example, the negative electrode current collector 122 has two opposite surfaces in a thickness direction of the negative electrode current collector 122, and the negative electrode film layer 123 is provided on either one or both of the two opposite surfaces of the negative electrode current collector 122.

In the foregoing solution, the negative electrode sheet 121 includes the negative electrode film layer 123. Further, the negative electrode film layer 123 includes the negative electrode active material and the binder. Further, the negative electrode active material includes the silicon-based material. The average-volume particle diameter Dv50 of the binder is 0.1-0.8 µm. The silicon-based material and the binder are added to the negative electrode film layer. The silicon-based material has a relatively high theoretical specific capacity, and helps improve energy density of the battery. In addition, the silicon-based material is a relatively hard material, and is not easy to be crushed when being cold pressed. In addition, the shape of a particle is irregular, and there is a specific gap between particles. Therefore, the negative electrode sheet including the silicon-based material usually has relatively large porosity. A binder whose average-volume particle diameter Dv50 is 0.1-0.8 µm is added to the negative electrode film layer, to not only increase active binding sites, but also effectively fill and bind a large pore region of the electrode sheet, improve a binding force to suppress severe volume expansion of the silicon-based material in a battery cycling process, maintain stability of an active material in the cycling process, and minimize a use amount of the binder, thereby improving cycle performance and power of the battery, so that the battery has relatively high energy density, power, and relatively good cycle performance.

In some embodiments, the average-volume particle diameter Dv50 of the binder is 0.1-*0.5* µm, and optionally, the average-volume particle diameter Dv50 of the binder is 0.1-0.3 µm.

In the foregoing solution, a binder whose average-volume particle diameter Dv50 is 0.1-0.8 µm is added to the negative electrode film layer, to suppress volume expansion of the silicon-based material in the battery cycling process. Further, the average-volume particle diameter Dv50 of the binder is 0.1-0.5 µm, particularly, 0.1-0.3 µm, to further improve a binding force between negative electrode active materials, thereby further improving cycle stability of the negative electrode active material in the cycling process, and obtaining a battery with a high binding force, high power, high energy density, and long cycle performance.

Herein, it should be noted that the average-volume particle diameter Dv50 of the binder may be 0.1 µm, 0.2 µm, 0.3 µm, 0.5 µm, or any value within a range including the foregoing values.

In some embodiments, based on 100 parts by weight of the negative electrode film layer 123, parts by weight of the binder are 1-5 parts by weight, and optionally, parts by weight of the binder are 2-4 parts by weight.

In the foregoing solution, in this example of the present application, a binder with a small particle diameter is added to the negative electrode film layer, so that the binder is filled in a large pore region of the negative electrode film layer, to suppress volume expansion of the silicon-based material in the battery cycling process. A mass proportion of the binder at the negative electrode film layer ranges from 1% to 5%, particularly, from 2% to 4%, to not only improve the binding force between negative electrode active materials to suppress volume expansion of the negative electrode sheet, but also reduce a decrease in energy density of the battery due to a too high content of the binder.

Herein, it should be noted that, based on 100 parts by weight of the negative electrode film layer 123, the parts by weight of the binder may be 1 part by weight, 1.5 parts by weight, 2 parts by weight, 4 parts by weight, or any value in a range including the foregoing values.

In some embodiments, the porosity of the negative electrode sheet 121 ranges from 15% to 60%, and optionally, the porosity of the negative electrode sheet 121 ranges from 20% to 45%.

In the foregoing solution, in this example of the present application, a theoretical capacity of the silicon-based material is relatively high. Therefore, when the silicon-based material is selected as the negative electrode active material for the battery, the battery has relatively high energy density. However, for the silicon-based material, if the porosity of the negative electrode sheet is too large, and the negative electrode sheet undergoes a severe volume expansion effect in the battery cycling process, binding and electrical contact between negative electrode active materials deteriorate. The porosity of the negative electrode sheet ranges from 15% to 60%, particularly, from 20% to 45%, to not only help the battery have relatively good energy density and fast charging performance, but also reduce deterioration of binding and electrical contact between negative electrode active materials due to too large porosity.

Herein, it should be noted that the porosity of the negative electrode sheet 121 may be 18%, 25%, 30%, 40%, or any value in a range including the foregoing values.

In some embodiments, the binder includes a hydrophilic group; and optionally, the hydrophilic group includes at least one of a sulfonic acid group, a phosphate group, a hydroxyl group, a carboxyl group, an amide group, an amino group, an aldehyde group, a carbonyl group, a cyano group, or an anhydride.

The hydrophilic group is also referred to as an oleophobic group, and has an atomic group that is water-soluble or is easily hydrophilic. The hydrophilic group may attract a water molecule or dissolve in water, and a solid surface with such functional groups is easily wetted by water.

In this example of the present application, a binder whose average-volume particle diameter Dv50 is 0.1-0.8 µm is added to the negative electrode sheet 121, to improve a binding force of the negative electrode sheet 121 to suppress severe volume expansion of the silicon-based material in the battery cycling process. However, if a particle diameter of the binder is relatively small, binder floating of the binder easily occurs in a coating and drying process of slurry, and consequently, the binder cannot play a binding action. Therefore, the binder includes at least one of the sulfonic acid group, the phosphate group, the hydroxyl group, the carboxyl group, the amide group, the amino group, the aldehyde group, the carbonyl group, the cyano group, or the anhydride, and these hydrophilic groups can increase an interaction force between the binder and each of the silicon-based material or a graphite material, thereby effectively modifying binder floating of a binder with a small particle diameter in a coating and drying process of the electrode sheet, prompting uniform retention of the binder in a gap of the silicon-based material, and effectively improving cohesion of the negative electrode sheet.

In some embodiments, the silicon-based material includes at least one of the following functional groups: a carboxyl group, a hydroxyl group, an aldehyde group, and a carbonyl group.

In this example of the present application, the silicon-based material includes at least one functional group in the carboxyl group, the hydroxyl group, the aldehyde group, and the carbonyl group, and these functional groups may interact with a monomer or a functional group in the binder, to enhance a binding effect between the silicon-based material and the binder.

In some embodiments, the specific surface area SSA of the silicon-based material satisfies 2 m²/g≤SSA≤10 m²/g, optionally, 2 m²/g≤SSA≤4 m²/g.

In this example of the present application, the specific surface area of the silicon-based material falls within the foregoing range, to further enhance a binding action between the silicon-based material and the binder, and dynamic performance of a material is relatively good, to facilitate initial coulombic efficiency of the battery.

Herein, it should be noted that the specific surface area of the silicon-based material may be 2 m²/g, 3 m²/g, 5 m²/g, 8 m²/g, or any value in a range including the foregoing values.

In some embodiments, the average-volume particle diameter Dv50 of the silicon-based material is 5-20 µm, and optionally, the average-volume particle diameter Dv50 of the silicon-based material is 8-15 µm.

In the foregoing solution, the average-volume particle diameter Dv50 of the silicon-based material is 5-20 µm, particularly, 8-15 µm, to not only enable the negative electrode sheet to have relatively large porosity to improve fast charging performance of the battery, but also reduce a decrease in a binding force between negative electrode active materials due to a too large particle diameter of the silicon-based material.

Herein, it should be noted that the average-volume particle diameter Dv50 of the silicon-based material may be 5 µm, 8 µm, 10 µm, 18 µm, or any value in a range including the foregoing values.

In some embodiments, the silicon-based material includes: carbon matrix particles, where the carbon matrix particle includes a three-dimensional network cross-linked pore structure; and silicon-based nanoparticles, where at least some of the silicon-based nanoparticles are disposed in the three-dimensional network cross-linked pore structure.

The three-dimensional network cross-linked pore structure is usually a structure in which two or more pores communicate with each other or are staggered with each other and share a pore volume with each other in the pore structure formed by the carbon matrix particle.

In this example of the present application, the carbon matrix particle has a stable porous skeleton structure, has a relatively strong supporting capability, exhibits a relatively high stress capability, and has excellent mechanical performance and electrical conductivity. The carbon matrix particle includes a three-dimensional network cross-linked pore structure, has relatively large space available for disposing the silicon-based nanoparticle, and may be used for storing a large amount of silicon. When the porous carbon matrix particle is composited with the silicon-based nanoparticle, silicon-based nanoparticles are not easy to aggregate, and can be uniformly dispersed in pores of the carbon matrix particle. After the carbon matrix particle is composited with the silicon-based nanoparticle, electrical conductivity of a silicon-carbon composite material may be improved, a volume effect of silicon in a lithium deintercalation/intercalation process is alleviated, a stress change of the silicon-based nanoparticle can be fully withstood, structural stability of the silicon-carbon composite material is improved, and cycle stability and a lithium storage capacity of the silicon-carbon composite material are improved. Therefore, when the silicon-carbon composite material is used in the battery, cycle performance and energy density of the battery are improved.

In a possible embodiment, when a test is made in a gas adsorption/desorption method, the total pore volume of pores whose pore diameter is greater than 100 nm in the carbon matrix particle is denoted by V1 cm³/g, and V1≥0.01, and optionally, 0.01≤V1≤0.5; and/or when a test is made in a gas adsorption/desorption method, the total pore volume of pores whose pore diameter is less than or equal to 100 nm in the carbon matrix particle is denoted by V2 cm³/g, and V2≥0.05, and optionally, 0.05≤V2≤1.1.

In this example of the present application, when the porosity of the carbon matrix particle falls within the foregoing range, pores occupy a proper volume in a skeleton, to not only improve stability of a skeleton structure, but also satisfy a capacity of silicon deposition. The silicon-based nanoparticle is attached in the pore, and the silicon-based nanoparticle and the porous carbon matrix particle may act synergistically, to improve a capacity and electrical conductivity of the silicon-carbon composite material.

Herein, it should be noted that V1 may be 0.01, 0.05, 0.1, 0.5, or any value in a range including the foregoing values; and V1 may be 0.05, 0.2, 0.5, 1, or any value in a range including the foregoing values.

In some embodiments, the silicon-based material includes at least one of a silicon-carbon material, or a composite of a silicon-carbon material and a silicon-oxygen material.

In the foregoing solution, the silicon-based material, particularly the silicon-carbon material or the composite of the silicon-oxygen material and the silicon-oxygen material, is added to the negative electrode active material, to help improve energy density of the battery.

Herein, it should be noted that the silicon-oxygen material is a compound including a silicon element and an oxygen element, and the silicon-carbon material is a compound including a silicon element and a carbon element.

In some embodiments, the silicon-oxygen material includes SiOₓ, and 0.4≤x≤1.6.

In the foregoing solution, the silicon-oxygen material in the silicon-based material not only has a high theoretical capacity and excellent stability, but also has advantages such as low costs, non-toxicity, and environmental friendliness. The silicon-oxygen material, particularly SiOₓ is used, to further improve performance of the battery.

Herein, it should be noted that the silicon-oxygen material includes but is not limited to the following substances: SiO_{0.4}, SiO_{0.6}, SiO, and SiO_{1.5}.

In some embodiments, the silicon-carbon material includes a silicon-carbon composite; and the ratio between a mass content A of a silicon element in the silicon-carbon composite and a mass content B of a carbon element in the silicon-carbon composite is 1.3≤B/A≤2 based on the total mass of the silicon-carbon composite.

In the foregoing solution, the silicon-carbon material has a relatively high theoretical capacity and relatively good cycle performance. The silicon-carbon material includes the silicon-carbon composite. The ratio between a mass proportion A of the silicon element to the silicon-carbon composite and a mass proportion B of the carbon element to the silicon-carbon composite is 1.3≤B/A≤2, to further improve performance of the battery.

Herein, it should be noted that in the silicon-carbon material, the mass ratio B/A of the carbon element to the silicon element may be 1.3, 1.5, 1.7, 3, or any value in a range including the foregoing values.

In some embodiments, the binder includes at least one of a polystyrene butadiene copolymer and a modified product thereof, a polystyrene-acrylate and a modified product thereof, a polyacrylate copolymer and a modified product thereof, a polyurethane copolymer and a modified product thereof, a copolymer of butadiene and acrylonitrile and a modified product thereof, polytetrafluoroethylene and a modified product thereof, or polyvinylidene fluoride and a modified product thereof.

In the foregoing solution, at least one of a polystyrene butadiene copolymer and a modified product thereof, a polystyrene-acrylate and a modified product thereof, a polyacrylate copolymer and a modified product thereof, a polyurethane copolymer and a modified product thereof, a copolymer of butadiene and acrylonitrile and a modified product thereof, polytetrafluoroethylene and a modified product thereof, or polyvinylidene fluoride and a modified product thereof that have a relatively good binding force serves as the binder, to help further improve a binding force between the negative electrode active material and the negative electrode current collector 122.

In some embodiments, based on 100 parts by weight of the negative electrode film layer 123, parts by weight of the silicon-based material are 25-50 parts by weight, and optionally, parts by weight of the silicon-based material are 30-40 parts by weight.

In the foregoing solution, in this example of the present application, the silicon-based material is added to the negative electrode active material, to improve energy density of the battery. However, the larger content of the silicon-based material leads to the larger porosity of the negative electrode sheet and the worse binding force between negative electrode active materials. Therefore, the mass proportion of the silicon-based material at the negative electrode film layer ranges from 25% to 50%, particularly, from 30% to 40%, to further improve performance of the battery.

Herein, it should be noted that, based on 100 parts by weight of the negative electrode film layer 123, the parts by weight of the silicon-based material may be 25 part by weight, 30 parts by weight, 40 parts by weight, 50 parts by weight, or any value in a range including the foregoing values.

In some embodiments, the negative electrode active material further includes graphite; and based on 100 parts by weight of the negative electrode film layer 123, parts by weight of the graphite are 45-70 parts by weight, and optionally, parts by weight of the graphite are 55-65 parts by weight.

In the foregoing solutions, the silicon-based material has a relatively high theoretical capacity, but has relatively poor electrical conductivity. Therefore, if only the silicon-based material is selected as the negative electrode active material of the battery, electrical conductivity of the battery is very poor. Graphite with relatively good electrical conductivity is added to the negative electrode active material, and a mass proportion of the graphite at the negative electrode film layer 123 ranges from 45% to 70%, particularly, from 55% to 65%, to maintain relatively good cycle performance of the battery.

Herein, it should be noted that, based on 100 parts by weight of the negative electrode film layer 123, the parts by weight of the graphite may be 50 part by weight, 58 parts by weight, 65 parts by weight, 72 parts by weight, or any value in a range including the foregoing values.

In some embodiments, the compacted density of the negative electrode sheet 121 is 1.0-2.2 g/cm³, and optionally, the compacted density of the negative electrode sheet 121 is 1.2-1.8 g/cm³.

In the foregoing solution, the compacted density of the negative electrode sheet 121 is 1.0-2.2 g/cm³, particularly 1.2-1.8 g/cm³, to further improve energy density of the battery.

Herein, it should be noted that the compacted density of the negative electrode sheet 121 may be 1 g/cm³, 1.5 g/cm³, 2.2 g/cm³, or any value in a range including the foregoing values.

In some embodiments, the thickness d1 of the negative electrode sheet 121 is 60-150 µm, and optionally, the thickness d1 of the negative electrode sheet 121 is 90-130 µm.

In the foregoing solution, the thickness d1 of the negative electrode sheet 121 is 60-150 µm, particularly 90-130 µm, to further improve energy density of the battery.

Herein, it should be noted that the thickness d1 of the negative electrode sheet 121 may be 60 µm, 80 µm, 100 µm, 120 µm, or any value in a range including the foregoing values.

In some embodiments, the negative electrode current collector 122 may be a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some embodiments, the negative electrode active material may further include a negative electrode active material for a battery well-known in the art. In an example, in addition to the silicon-based material, the negative electrode active material may include at least one of the following materials: synthetic graphite, natural graphite, soft carbon, hard carbon, a tin-based material, lithium titanate, and the like. The tin-based material may be selected from at least one of elemental tin, a tin-oxygen compound, and a tin alloy. In addition, the silicon-based material may be selected from at least one of elemental silicon, a silicon-oxygen compound, a silicon-carbon composite, a silicon-nitrogen composite, and a silicon alloy. However, the present application is not limited to these materials, and another conventional material that can be used as a negative electrode active material of a battery may also be used. These negative electrode active materials may be used alone or in combination of two or more thereof.

In some embodiments, the binder may be selected from at least one of a styrene-butadiene rubber (SBR), a styrene-butadiene block copolymer (SBS), an acrylonitrile-butadienestyrene copolymer (ABS), polyurethane (PU), polytetrafluoroethylene (PTFE).

In some embodiments, the negative electrode film layer 123 further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer 123 further optionally includes another auxiliary agent, for example, a thickener (for example, sodium carboxymethyl cellulose (CMC-Na)).

In some embodiments, the negative electrode sheet 121 may be prepared in the following manner: dispersing the foregoing components such as the negative electrode active material, the conductive agent, the binder, and any other component for preparing the negative electrode sheet 121 in a solvent (for example, deionized water) to form negative electrode slurry; and coating the negative electrode slurry on the negative electrode current collector 122, and performing procedures such as drying and cold pressing, to obtain the negative electrode sheet 121.

### [Positive electrode sheet]

The positive electrode sheet includes a positive current collector and a positive electrode film layer disposed on at least one surface of the positive current collector, the positive electrode film layer including a positive electrode active material.

As an example, the positive electrode current collector has two opposite surfaces in a thickness direction of the positive electrode current collector, and the positive electrode film layer is provided on either one or both of the two opposed surfaces of the positive electrode current collector.

In some embodiments, the positive electrode active material includes Liₓ(NiₐCo_{b}Mn_{c})_{1-d}MaO_{2-y}A_{y}, M includes at least one of Zr, Al, B, Ta, Mo, W, Nb, Sb, or La, 0.2<x≤1.2, 0.5≤a<1.0, 0≤b<0.5, 0≤c<1, 0≤d<1, and 0≤y<0.02.

Herein, it should be noted that the positive electrode active material includes but is not limited to the following substances: Li_{0.5}Ni_{0.5}Co_{0.1}Mn_{0.4}O₂, Li_{0.5}(Ni_{0.5}Co_{0.1}Mn_{0.4})_{0.5}Zr_{0.5}O_{1.9}A_{0.1}, and LiNi_{0.4}Co_{0.3}Mn_{0.3}O₂.

It should be noted that, in the positive electrode sheet, a battery, or an electric device, because a lithium ion is consumed in processes such as formation and cycling of the battery, a measured lithium element content in the positive electrode active material is less than 1. In addition, if the positive electrode sheet and the negative electrode sheet are supplemented with lithium, the measured lithium element content in the positive electrode active material is greater than 1 after the processes such as formation and cycling of the battery.

Similarly, in the enumeration of the positive electrode material in the present application, a molar content of O is only a theoretical state value, a molar content of oxygen changes due to release of oxygen from a lattice, and an actual molar content of O fluctuates.

In some embodiments, the positive electrode current collector may use a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In some embodiments, the positive electrode active material may alternatively be a positive electrode active material for a battery well-known in the art. As an example, the positive electrode active material may include at least one of olivine-structured lithium-containing phosphate, lithium-transition metal oxide, and their respective modifying compounds. However, the present application is not limited to these materials, and other conventional materials that can be used as a positive electrode active material of a battery may also be used. These positive electrode active materials may be used alone or in combination of two or more thereof. Among them, examples of the lithium transition metal oxide may include, but are not limited to, at least one of lithium cobalt oxide (e.g., LiCoO₂), lithium nickel oxide (e.g., LiNiO₂), lithium manganese oxide (e.g., LiMnO₂ or LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also simply referred to as NCM₃₃₃), LiNi_{0.5}Co_{0.2}Mn_{0.3}O₂ (also simply referred to as NCM₅₂₃), LiNi_{0.5}Co_{0.25}Mn_{0.25}O₂ (also simply referred to as NCM₂₁₁), LiNi_{0.6}Co_{0.2}Mn_{0.2}O₂ (also simply referred to as NCM₆₂₂), LiNi_{0.8}Co_{0.1}Mn_{0.1}O₂ (also simply referred to as NCM₈₁₁)), lithium nickel cobalt aluminum oxide (e.g., LiNi_{0.85}Co_{0.15}Al_{0.05}O₂), modifying compounds thereof, and the like. Examples of the olivine-structured lithium-containing phosphate may include, but are not limited to, at least one of lithium iron phosphate (e.g., LiFePO₄ (which may also be simply referred to as LFP)), a composite of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon.

In some implementations, the positive electrode film layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some implementations, the positive electrode film layer further optionally includes a conductive agent. As an example, the conductive agent may include at least one of superconducting carbon, acetylene black, carbon black, ketjen black, carbon dots, carbon nanotubes, graphene, and carbon nanofibers.

In some embodiments, the positive electrode sheet may be prepared in the following manner: dispersing the foregoing components such as the positive electrode active material, the conductive agent, the binder, and any other component for preparing the positive electrode sheet in a solvent (for example, N-methylpyrrolidone) to form positive electrode slurry; and coating the positive electrode slurry on a positive electrode current collector, and performing procedures such as drying and cold pressing, to obtain the positive electrode sheet.

### [Electrolyte]

The electrolyte functions to conduct ions between the positive electrode sheet and the negative electrode sheet. The type of the electrolyte is not specifically limited in the present application, and may be selected according to a requirement. For example, the electrolyte may be liquid, gelled or all solid.

In some embodiments, the electrolyte uses an electrolyte solution. The electrolyte solution includes an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution further optionally includes an additive. For example, the additive may include a negative electrode film-forming additive or a positive electrode film-forming additive, and may further include an additive capable of improving specific performance of a battery, for example, an additive for improving overcharge performance of a battery, or an additive for improving high-temperature or low-temperature performance of a battery.

### [Separator]

In some embodiments, the battery cell further includes a separator. The type of the separator is not particularly limited in the present application, and any well-known porous separator with good chemical stability and mechanical stability may be used.

In some embodiments, a material of the separator may be selected from at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some embodiments, the positive electrode sheet, the negative electrode sheet, and the separator may be manufactured into the electrode assembly through a winding process or a lamination process.

In some embodiments, the battery cell may include an outer package. The outer package may be used to package the electrode assembly and the electrolyte.

In some embodiments, the outer package of the battery cell may be a hard casing, for example, a hard plastic casing, an aluminum casing, or a steel casing. The outer package of the battery cell may alternatively be a pouch, for example, a bag-type pouch. The material of the pouch may be plastic, and examples of the plastic include polypropylene, polybutylene terephthalate, and polybutylene succinate.

The shape of the battery cell is not particularly limited in the present application, and may be a cylindrical shape, a square shape, or any other shape. For example, FIG. 2 is a schematic diagram of a battery cell according to an embodiment of the present application.

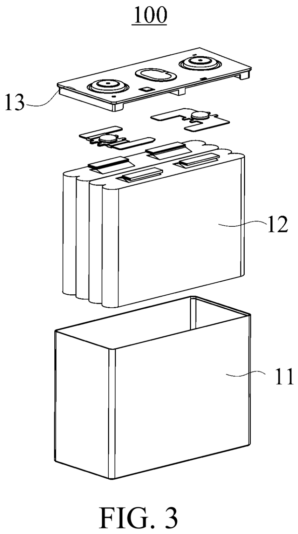

FIG. 3 is a schematic structural diagram of a battery cell according to an embodiment of the present application. As shown in FIG. 3, an outer package of a battery cell 100 includes a casing 11 and a cover plate 13. The casing 11 may include a bottom plate and side plates connected to the bottom plate, and the bottom plate and the side plates enclose an accommodating chamber. The casing 11 has an opening communicating with the accommodating chamber, and the cover plate 13 can cover the opening to close the accommodating chamber. A positive electrode sheet, a negative electrode sheet 121, and a separator may be formed into an electrode assembly 12 through a winding process or a lamination process. The electrode assembly 12 is packaged within the accommodation chamber. An electrolyte is impregnated into the electrode assembly 12. There may be one or a plurality of electrode assemblies 12 included in the battery cell 100, and those skilled in the art may perform selection according to specific actual requirements.

In some embodiments, the battery cell 100 may be assembled into a battery module, there may be one or a plurality of battery cells 100 included in the battery module, and those skilled in the art may select a specific quantity based on the application and capacity of the battery module.

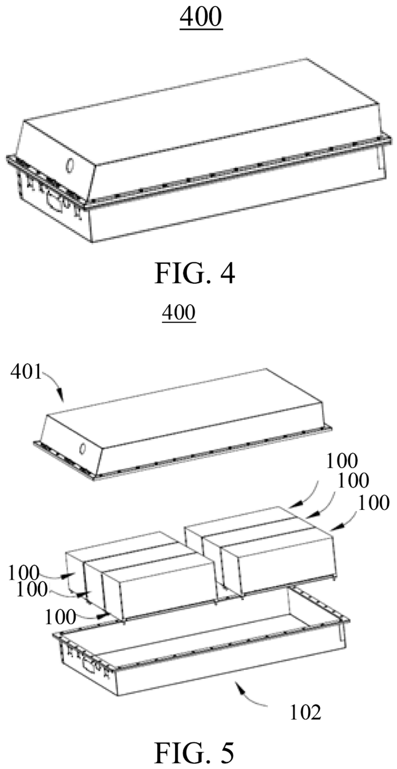

FIG. 4 is a schematic diagram of a battery according to an embodiment of the present application. FIG. 5 is a schematic structural diagram of a battery according to an embodiment of the present application. Referring to FIG. 4 and FIG. 5, a battery 400 may include a battery case and a plurality of battery cells 100 disposed in the battery case. The battery case includes an upper case 401 and a lower case 402, the upper case 401 can cover the lower case 402 and form closed space for accommodating the battery cell 100. The plurality of battery cells 100 may be arranged in the battery case in any manner.

In addition, the present application further provides an electric device. The electric device includes at least one of a negative electrode sheet 121, a battery cell 100, or a battery 400 provided in the present application. The negative electrode sheet 121, the battery cell 100, or the battery 400 may serve as a power source of the electric device, or may serve as an energy storage unit of the electric device. The electric device may include a mobile device (e.g., a mobile phone, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like, but is not limited thereto.

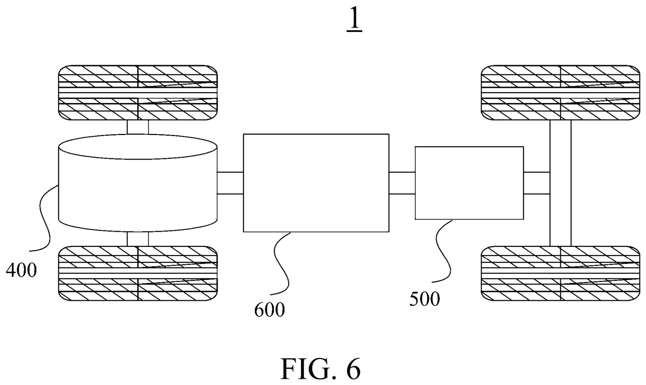

For example, FIG. 6 is a schematic structural diagram of an electric device according to an embodiment of the present application. As shown in FIG. 6, the electric device is a vehicle 1. The vehicle 1 may be a fuel vehicle, a gas vehicle, or a new energy vehicle, and the new energy vehicle may be a battery electric vehicle, a hybrid vehicle, or a range-extended electric vehicle. A motor 500, a controller 600, and a battery 400 may be disposed inside the vehicle 1. The controller 600 is configured to control the battery 400 to supply power to the motor 500. For example, the battery 400 may be disposed at the bottom or the front or the rear of the vehicle 1. The battery 400 may be used to supply power to the vehicle 1. For example, the battery 400 may serve as an operating power source of the vehicle 1, serve as a circuitry of the vehicle 1, for example, used for operating power requirements for starting, navigation, and running of the vehicle 1. In another example of the present application, the battery 400 may not only serve as the operating power source of the vehicle 1, but also serve as a driving power source of the vehicle 1, instead of or partially instead of fuel or natural gas to provide driving power for the vehicle 1.

As the electric device, the negative electrode sheet 121, the battery cell 100, or the battery 400 may be selected according to use requirements of the electric device.

The electric device is a pure electric vehicle, a hybrid electric vehicle, a plug-in hybrid electric vehicle, or the like. The battery cell 100 or the battery 400 may be used, to satisfy a requirement of the electric device for high power and high energy density of the battery.

In another example, the apparatus may be a cell phone, a tablet computer, a notebook computer, or the like. The device usually needs to be light and thin, and the battery cell 100 may serve as a power source.

### [Examples]

Embodiments of the present application are described below. The example described below are illustrative only and are not to be construed as limiting the present application. In the embodiments, specific techniques or conditions are not indicated, and they are performed according to techniques or conditions described in documents in the art or according to the specification of the product. The reagents or instruments used without specifying the manufacturer(s) are conventional products that are commercially available.

### [Example 1]

### 1. Preparation of a lithium-ion battery

### (1.1) Preparation of a negative electrode sheet

(1.11) Preparation of a silicon-carbon material, including: providing a gas including a silicon precursor to a carbon matrix particle with a carbon skeleton; and performing chemical vapor deposition to generate, from the silicon precursor, a silicon nanoparticle attached to the carbon skeleton, to obtain a silicon-carbon composite material (which is briefly referred to as a silicon-carbon material).

(1.12) Preparation of a binder: mixing some emulsifiers, some acrylate monomers, and some styrene monomers with water to prepare a pre-emulsion; mixing some other emulsifiers, some other acrylate monomers, and some other styrene monomers with water, and adding an initiator to initiate polymerization to prepare a seed emulsion; and adding the pre-emulsion to the seed emulsion in a dropwise manner, and adding an initiator to perform polymerization reaction to prepare a styrene-acrylic emulsion whose particle diameter Dv50 is 100 nm-900 nm of latex spheres. The total mass of the emulsifiers is 0.7% to 5%, optionally 1% to 4.5% of preparation monomers, and the preparation monomers include the acrylate monomer and the styrene monomer. Based on the total mass of the preparation monomers, by a mass percentage, the styrene-acrylic emulsion includes styrene monomers accounting for 30% to 80%, acrylate monomers accounting for 20% to 70%, and functional monomers accounting for 0 to 10%. The functional monomers are added in the steps of preparing the pre-emulsion and/or the seed emulsion. In this example, the functional monomer is hydroxyethyl acrylate.

(1.13) Preparation of a negative electrode sheet: thoroughly stirring and uniformly mixing a first active material named synthetic graphite, a second active material named a silicon-carbon material, a conductive agent named acetylene black, a conductive agent named a single-walled CNT, a binder named a styrene-acrylic emulsion, and a thickener named CMC-Na in a proper amount of deionized water solvent systems by a weight ratio 64.9%:30%:1%:0.1%:3%:1% to obtain a negative electrode active material; and coating the negative electrode active material on a Cu foil, and performing drying, cold pressing, and slitting to obtain a negative electrode sheet. Parts by weight of the styrene-acrylic emulsion are 3 parts by weight, and an average-volume particle diameter Dv50 of the styrene-acrylic emulsion is 0.15 µm; and an average-volume particle diameter Dv50 of the second active material named silicon carbon is 10 µm, and a specific surface area of the second active material named silicon carbon is 6 m²/g.

(1.2) Preparation of a positive electrode sheet: dissolving a positive electrode active material named lithium nickel cobalt manganate (LiNi_{0.6}Co_{0.2}Mn_{0.2}O₂), a conductive agent named a carbon nanotube (CNT), a binder named polyvinylidene fluoride (PVDF) in a solvent of N-methylpyrrolidone (NMP) by a weight ratio 96%:2%:2%; performing thorough stirring and uniform mixing to prepare a positive electrode active material; and coating the positive electrode active material on an Al foil, and performing drying, cold pressing, and slitting to obtain a positive electrode plate.

(1.3) Preparation of a separator: using a PE porous polymer film as a separator.

(1.4) Electrolyte: dissolving EC/EMC/DMC in 1M LiPF₆ by a volume ratio 1:1:1, and performing uniform stirring.

(1.5) Assembly: stacking a positive electrode sheet, a separator, and a negative electrode sheet in sequence, so that the separator plays a separation action between a positive electrode and a negative electrode; and performing winding to obtain an electrode assembly, and adding an electrolyte. Subsequently, hot pressing is performed at 100 °C and 250 MPa for 2 min, to obtain a lithium-ion battery.

### [Example 2]

A preparation process of a lithium-ion battery in Example 2 is basically the same as that in Example 1, except that an average-volume particle diameter Dv50 of a binder is 0.1 µm.

### [Example 3]

A preparation process of a lithium-ion battery in Example 3 is basically the same as that in Example 1, except that an average-volume particle diameter Dv50 of a binder is 0.3 µm.

### [Example 4]

A preparation process of a lithium-ion battery in Example 4 is basically the same as that in Example 1, except that an average-volume particle diameter Dv50 of a binder is 0.5 µm.

### [Example 5]

A preparation process of a lithium-ion battery in Example 5 is basically the same as that in Example 1, except that an average-volume particle diameter Dv50 of a binder is 0.8 µm.

### [Example 6]

A preparation process of a lithium-ion battery in Example 6 is basically the same as that in Example 1, except that parts by weight of a binder are 2 parts by weight.

### [Example 7]

A preparation process of a lithium-ion battery in Example 7 is basically the same as that in Example 1, except that parts by weight of a binder are 4 parts by weight.

### [Example 8]

A preparation process of a lithium-ion battery in Example 8 is basically the same as that in Example 1, except that parts by weight of a binder are 7 parts by weight.

### [Example 9]

A preparation process of a lithium-ion battery in Example 9 is basically the same as that in Example 1, except that a binder is a styrene-butadiene rubber (SBR).

### [Example 10]

A preparation process of a lithium-ion battery in Example 10 is basically the same as that in Example 1, except that a binder is polyurethane.

### [Example 11]

A preparation process of a lithium-ion battery in Example 11 is substantially the same as that in Example 1, except that parts by weight of a second active material are 20 parts by weight, and a weight ratio of a first active material named synthetic graphite, a second active material named a silicon-carbon material, a conductive agent named acetylene black, a conductive agent named a single-walled CNT, a binder named a styrene-acrylic emulsion, and a thickener named CMC-Na is 74.9%:20%:1%:0.1%:3%:1%.

### [Example 12]

A preparation process of a lithium-ion battery in Example 12 is substantially the same as that in Example 1, except that parts by weight of a second active material are 40 parts by weight, and a weight ratio of a first active material named synthetic graphite, a second active material named a silicon-carbon material, a conductive agent named acetylene black, a conductive agent named a single-walled CNT, a binder named a styrene-acrylic emulsion, and a thickener named CMC-Na is 44.9%:50%:1%:0.1%:3%:1%.

### [Example 13]

A preparation process of a lithium-ion battery in Example 13 is basically the same as that in Example 1, except that an average-volume particle diameter Dv50 of a second active material is 15 µm.

### [Example 14]

A preparation process of a lithium-ion battery in Example 14 is basically the same as that in Example 1, except that a second active material is silicon monoxide.

### [Example 15]

A preparation process of a lithium-ion battery in Example 15 is basically the same as that in Example 1, except that a second active material is silicon oxygen.

### [Example 16]

A preparation process of a lithium-ion battery in Example 16 is substantially the same as that in Example 1, except that there is no first active material, and a weight ratio of a second active material named a silicon-carbon material, a conductive agent named acetylene black, a conductive agent named a single-walled CNT, a binder named a styrene-acrylic emulsion (SAR), and a thickener named CMC-Na is 94.9%:1%:0.1%:3%:1%.

### [Example 17]

A preparation process of a lithium-ion battery in Example 17 is basically the same as that in Example 1, except that there is no functional monomer in a preparation binder.

### [Example 18]

A preparation process of a lithium-ion battery in Example 18 is basically the same as that in Example 1, except that there is no acrylic acid in a preparation binder.

### [Example 19]

A preparation process of a lithium-ion battery in Example 19 is basically the same as that in Example 1, except that there is no methacrylamide in a preparation binder.

### [Example 20]

A preparation process of a lithium-ion battery in Example 20 is basically the same as that in Example 1, except that the specific surface area of a second active material is 4 m²/g.

### [Comparative example 1]

A preparation process of a lithium-ion battery in Comparative example 1 is basically the same as that in Example 1, except that an average-volume particle diameter Dv50 of a binder is 1 µm.

### [Comparative example 2]

A preparation process of a lithium-ion battery in Comparative example 2 is basically the same as that in Example 1, except that an average-volume particle diameter Dv50 of a binder is 5 µm.

### [Comparative example 3]

A preparation process of a lithium-ion battery in Comparative example 3 is basically the same as that in Example 1, except that a second active material is natural graphite.

### [Comparative example 4]

A preparation process of a lithium-ion battery in Comparative example 4 is substantially the same as that in Example 1, except that there is no second active material, and a weight ratio of a first active material named a silicon-carbon material, a conductive agent named acetylene black, a conductive agent named a single-walled CNT, a binder named a styrene-acrylic emulsion (SAR), and a thickener named CMC-Na is 94.9%:1%:0.1%:3%:1%.

### (2) Performance representation of a negative electrode sheet of a lithium-ion battery

(2.1) Measurement of an average-volume particle diameter Dv50: A test is made by using a laser particle diameter analyzer (for example, Master Size 3000) with reference to a GB/T 19077-2016 Particle size distribution laser diffraction method.

### (2.2) Measurement of the porosity: Reference is made to GB/T 24586-2009.

Pre-processing: selecting more than 20 original sheets with good appearance and no powder drop at the edge by using a tweezer; filling the original sheets in a sample cup; recording a quantity of sheets; and calculating an apparent volume.

Measurement: placing a sample cup filled with a sample in a true density tester in a closed test system; introducing a helium gas based on a program; detecting pressure of a gas in a sample chamber and an expansion chamber; and calculating a true volume according to the Bohr's law (PV=nRT), to obtain the porosity of a sample to be tested.

(2.3) Measurement of compacted density: For details, refer to GB/T 24533-2009. A specific amount of powder is taken and placed in a compaction dedicated die, the die is placed on a compacted density instrument, a weight m of the powder is obtained, and pressure of 400 kN is set. The thickness (thickness after pressure release) and the volume v of the powder can be read on this device, and the compacted density is calculated according to ρ=m/v.

(2.4) Measurement of a total pore volume: For details, refer to GB/T 19587-2004. A mesoporous pore size distribution test BJH (Barret joyner Halenda) is used. In a micro-mesoporous mode, a test is made in a gas adsorption/desorption method, and adsorption branch data is selected. A total pore volume V1 of pores whose pore diameter is greater than 100 nm and a total pore volume V2 of pores whose pore diameter is less than or equal to 100 nm are separately measured and counted.

(2.5) Measurement of a specific surface area SSA: Reference can be made to GB/T 19587-2017. A test is made in an inert gas (for example, nitrogen) adsorption specific surface area analysis testing method, and calculation is performed in a BET (Brunauer Emmett Teller) method. A nitrogen adsorption specific surface area analysis test may be performed by a Tri-Star 3020 Specific Surface Area Pore Size Analysis Tester from Micromeritics, USA.

**Table 1 Specific experiment parameters in Examples 1-20 and Comparative examples 1-4**

| Group | Dv50 (µm) of a binder | Parts by weight of the binder | Hydrophilic group in the binder | Type of the binder | First active material | Second active material | Parts by weight of the second active material | Dv50 (µm) of the second active material | Specific surface area (m²/g) of the second active material | Porosity of a negative electrode sheet |
|---|---|---|---|---|---|---|---|---|---|---|
| Example 1 | 0.15 | 3 | Hydroxyl group | Phenylpropane | Graphite | Silicon carbon | 30 | 10 | 6 | 32.21% |
| Example 2 | 0.1 | 3 | Hydroxyl group | Phenylpropane | Graphite | Silicon carbon | 30 | 10 | 6 | 32.09% |
| Example 3 | 0.3 | 3 | Hydroxyl group | Phenylpropane | Graphite | Silicon carbon | 30 | 10 | 6 | 32.12% |
| Example 4 | 0.5 | 3 | Hydroxyl group | Phenylpropane | Graphite | Silicon carbon | 30 | 10 | 6 | 32.03% |
| Example 5 | 0.8 | 3 | Hydroxyl group | Phenylpropane | Graphite | Silicon carbon | 30 | 10 | 6 | 32.14% |
| Example 6 | 0.15 | 2 | Hydroxyl group | Phenylpropane | Graphite | Silicon carbon | 30 | 10 | 6 | 32.55% |
| Example 7 | 0.15 | 4 | Hydroxyl group | Phenylpropane | Graphite | Silicon carbon | 30 | 10 | 6 | 32.16% |
| Example 8 | 0.15 | 7 | Hydroxyl group | Phenylpropane | Graphite | Silicon carbon | 30 | 10 | 6 | 32.98% |
| Example 9 | 0.15 | 3 | Hydroxyl group | SBR | Graphite | Silicon carbon | 30 | 10 | 6 | 32.06% |
| Example 10 | 0.15 | 3 | Hydroxyl group | Polyurethane | Graphite | Silicon carbon | 30 | 10 | 6 | 32.20% |
| Example 11 | 0.15 | 3 | Hydroxyl group | Phenylpropane | Graphite | Silicon carbon | 20 | 10 | 6 | 27.41% |
| Example 12 | 0.15 | 3 | Hydroxyl group | Phenylpropane | Graphite | Silicon carbon | 50 | 10 | 6 | 36.34% |
| Example 13 | 0.15 | 3 | Hydroxyl group | Phenylpropane | Graphite | Silicon carbon | 30 | 15 | 6 | 33.49% |
| Example 14 | 0.15 | 3 | Hydroxyl group | Phenylpropane | Graphite | Silicon monoxide | 30 | 10 | 6 | 30.03% |
| Example 15 | *0.15* | 3 | Hydroxyl group | Phenylpropane | Graphite | Silicon oxygen | 30 | 10 | 6 | 30.03% |
| Example 16 | 0.15 | 3 | Hydroxyl group | Phenylpropane | / | Silicon carbon | 100 | 10 | 6 | 40.80% |
| Example 17 | 0.15 | 3 | / | Phenylpropane | Graphite | Silicon carbon | 30 | 10 | 6 | 32.97% |
| Example 18 | 0.15 | 3 | Carboxyl | Phenylpropane | Graphite | Silicon carbon | 30 | 10 | 6 | 32.54% |
| Example 19 | 0.15 | 3 | Amide group | Phenylpropane | Graphite | Silicon carbon | 30 | 10 | 6 | 32.77% |
| Example 20 | 0.15 | 3 | Hydroxyl group | Phenylpropane | Graphite | Silicon carbon | 30 | 10 | 4 | 33.62% |
| Comparative example 1 | 1 | 3 | Hydroxyl group | Phenylpropane | Graphite | Silicon carbon | 30 | 10 | 6 | 32.22% |
| Comparative example 2 | 5 | 3 | Hydroxyl group | Phenylpropane | Graphite | Silicon carbon | 30 | 10 | 6 | 32.13% |
| Comparative example 3 | 0.15 | 3 | Hydroxyl group | Phenylpropane | Graphite | Natural graphite | 30 | 10 | 6 | 32.15% |
| Comparative example 4 | 0.15 | 3 | Hydroxyl group | Phenylpropane | Graphite | / | / | / | / | 25.25% |

### 3. Performance representation of a lithium-ion battery

(3.1) Test of cycle performance: In a condition of 45 °C, a charging and discharging voltage range of the battery is kept as 2.5-4.35 V, cycling is performed at 1C current density, and a retention rate of a battery capacity after 500 cycles is recorded. For a test result, refer to Table 2.

(3.2) Measurement of energy density: In a normal temperature condition, 4.35 V is reached through charging at 0.5 C current density, then 2.5 V is reached through discharging, and energy density in a discharging process is recorded; and this is repeated three times, and average discharging energy E is calculated. A mass M of the lithium-ion battery is obtained, and energy density GED=E/M of the lithium-ion battery is calculated. For a measurement result, refer to Table 2.

(3.3) Test of power performance: In a normal temperature condition, the battery is fully charged at 1 C current density, and then is discharged at 4 C current density, and a discharging time of the battery is recorded. For a measurement result, refer to Table 2.

**Table 2 Performance tests in Examples 1-20 and Comparative examples 1-4**

| Group | Cycle Performance | Energy Density (Wh/Kg) | Discharging time (s) |
|---|---|---|---|
| Example 1 | 84.63% | 390 | 123 |
| Example 2 | 84.91% | 390 | 126 |
| Example 3 | 83.78% | 390 | 122 |
| Example 4 | 82.35% | 390 | 124 |
| Example 5 | 82.20% | 390 | 115 |
| Example 6 | 84.04% | 390.5 | 117 |
| Example 7 | 84.76% | 389.5 | 119 |
| Example 8 | 84.32% | 388 | 120 |
| Example 9 | 84.01% | 390 | 124 |
| Example 10 | 84.67% | 390 | 123 |
| Example 11 | 85.39% | 322 | 120 |
| Example 12 | 84.48% | 400 | 127 |
| Example 13 | 81.84% | 390 | 131 |
| Example 14 | 83.51% | 390 | 122 |
| Example 15 | 83.22% | 391 | 124 |
| Example 16 | 69.53% | 500 | 126 |
| Example 17 | 81.26% | 390 | 118 |
| Example 18 | 84.23% | 390 | 126 |
| Example 19 | 84.71% | 390 | 127 |
| Example 20 | 85.11% | 390 | 130 |
| Comparative example 1 | 84.63% | 390 | 105 |
| Comparative example 2 | 84.91% | 390 | 99 |
| Comparative example 3 | 83.78% | 250 | 108 |
| Comparative example 4 | 83.35% | 240 | 115 |

In this example of the present application, the cycle performance of the battery may be represented by a capacity retention rate of 500 cycles. The higher capacity retention rate of 500 cycles indicates the better cycle performance of the battery. The rate performance of the battery may be represented by a discharging time at 4C, and the longer discharging time indicates the slower attenuation speed of the battery and the better rate performance of the battery.

Based on Examples 1-16 and Comparative examples 3 and 4, it can be learned that addition of a silicon-based material to a negative electrode film layer helps improve energy density and rate performance of the battery.

Based on Examples 1-16 and Comparative examples 1 and 2, it can be learned that addition of a binder whose particle diameter is 0.1-0.8 µm to a negative electrode film layer helps maintain relatively high energy density and relatively good rate performance while improving cycle performance of the battery.

Based on Examples 1-5, it can be learned that addition of a binder that is 0.1-0.5 µm, particularly 0.1-0.3 µm to a negative electrode film layer helps further enable the battery to have relatively good cycle performance, relatively high energy density, and relatively good rate performance.

Based on Examples 1 and 6-8, it can be learned that a binder accounting for 1-5 parts by weight is added to a negative electrode film layer. That is, a mass proportion of the binder at the negative electrode film layer ranges from 1% to 5%. This helps further enable the battery to have relatively good cycle performance, relatively high energy density, and relatively good rate performance.

Based on Examples 1, 9, and 10, it can be learned that a plurality of binders can improve cycle performance of the battery, so that the battery can have relatively good cycle performance, relatively high energy density, and relatively good rate performance.

Based on Examples 1, 11, and 12, it can be learned that a silicon-based material accounting for 25-50 parts by weight is added to a negative electrode film layer. That is, a mass proportion of the silicon-based material at the negative electrode film layer ranges from 25% to 50%. This helps further improve energy density and rate performance of the battery.

Based on Examples 1, 14, and 15 and Comparative examples 3 and 4, it can be learned that a plurality of silicon-based materials can improve energy density and rate performance of the battery.

Based on Examples 1 and 16, it can be learned that addition of graphite to a negative electrode film layer helps improve cycle performance of the battery.

Based on Examples 1 and 17, it can be learned that introduction of a hydrophilic group into a binder helps further improve cycle performance and rate performance of the battery.

Based on Examples 1, 18, and 19, it can be learned that a plurality of hydrophilic groups are applicable to the technical solutions of the present application.

Based on Examples 1 and 20, it can be learned that the specific surface area of a second active material is 2-10 m²/g, particularly 2-4 m²/g, to improve battery performance.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the implementations without departing from the subject matter of the present application, and other implementations constructed by combining some of the constituent elements in the implementations are also included in the scope of the present application.

## Claims

1. A negative electrode sheet, **characterized by** comprising:
a negative electrode current collector and a negative electrode film layer provided on at least one side of the negative electrode current collector, wherein
the negative electrode film layer comprises a negative electrode active material and a binder, and the negative electrode active material comprises a silicon-based material; and
an average-volume particle diameter Dv50 of the binder is 0.1-0.8 µm.

2. The negative electrode sheet according to claim 1, wherein the average-volume particle diameter Dv50 of the binder is 0.1-0.5 µm, and optionally, the average-volume particle diameter Dv50 of the binder is 0.1-0.3 µm.

3. The negative electrode sheet according to claim 1 or 2, wherein based on 100 parts by weight of the negative electrode film layer, parts by weight of the binder are 1-5 parts by weight, and optionally, parts by weight of the binder are 2-4 parts by weight.

4. The negative electrode sheet according to any one of claims 1 to 3, wherein the porosity of the negative electrode sheet ranges from 15% to 60%, and optionally, the porosity of the negative electrode sheet ranges from 20% to 45%.

5. The negative electrode sheet according to any one of claims 1 to 4, wherein the binder comprises a hydrophilic group; and
optionally, the hydrophilic group comprises at least one of a sulfonic acid group, a phosphate group, a hydroxyl group, a carboxyl group, an amide group, an amino group, an aldehyde group, a carbonyl group, a cyano group, or an anhydride.

6. The negative electrode sheet according to any one of claims 1 to 5, wherein the silicon-based material comprises at least one of the following functional groups: a carboxyl group, a hydroxyl group, an aldehyde group, and a carbonyl group.

7. The negative electrode sheet according to any one of claims 1 to 6, wherein the specific surface area of the silicon-based material satisfies 2 m²/g≤SSA≤10 m²/g, optionally, 2 m²/g≤SSA≤4 m²/g.

8. The negative electrode sheet according to any one of claims 1 to 7, wherein the average-volume particle diameter Dv50 of the silicon-based material is 5-20 µm, and optionally, the average-volume particle diameter Dv50 of the silicon-based material is 8-15 µm.

9. The negative electrode sheet according to any one of claims 1 to 8, wherein the silicon-based material comprises:
carbon matrix particles, wherein the carbon matrix particle comprises a three-dimensional network cross-linked pore structure; and
silicon-based nanoparticles, wherein at least some of the silicon-based nanoparticles are disposed in the three-dimensional network cross-linked pore structure.

10. The negative electrode sheet according to claim 9, wherein when a test is made in a gas adsorption/desorption method, the total pore volume of pores whose pore diameter is greater than 100 nm in the carbon matrix particle is denoted by V1 cm³/g, and V1≥0.01, and optionally, 0.01≤V1≤0.5; and/or
when a test is made in a gas adsorption/desorption method, the total pore volume of pores whose pore diameter is less than or equal to 100 nm in the carbon matrix particle is denoted by V2 cm³/g, and V2≥0.05, and optionally, 0.05≤V2≤1.1.

11. The negative electrode sheet according to any one of claims 1 to 8, wherein the silicon-based material comprises at least one of a silicon-carbon material, or a composite of a silicon-carbon material and a silicon-oxygen material.

12. The negative electrode sheet according to claim 11, wherein the silicon-oxygen material comprises SiOx, and 0.4≤x≤1.6.

13. The negative electrode sheet according to claim 11 or 12, wherein the silicon-carbon material comprises a silicon-carbon composite; and
the ratio of a mass content B of a carbon element in the silicon-carbon composite to a mass content A of a silicon element in the silicon-carbon composite is 1.3≤B/A≤2 based on the total mass of the silicon-carbon composite.

14. The negative electrode sheet according to any one of claims 1 to 13, wherein the binder comprises at least one of a polystyrene butadiene copolymer and a modified product thereof, a polystyrene-acrylate and a modified product thereof, a polyacrylate copolymer and a modified product thereof, a polyurethane copolymer and a modified product thereof, a copolymer of butadiene and acrylonitrile and a modified product thereof, polytetrafluoroethylene and a modified product thereof, or polyvinylidene fluoride and a modified product thereof.

15. The negative electrode sheet according to any one of claims 1 to 14, wherein based on 100 parts by weight of the negative electrode film layer, parts by weight of the silicon-based material are 25-50 parts by weight, and optionally, parts by weight of the silicon-based material are 30-40 parts by weight.

16. The negative electrode sheet according to any one of claims 1 to 15, wherein
the negative electrode active material further comprises graphite; and
based on 100 parts by weight of the negative electrode film layer, parts by weight of the graphite are 45-70 parts by weight, and optionally, parts by weight of the graphite are 55-65 parts by weight.

17. The negative electrode sheet according to any one of claims 1 to 16, wherein the compacted density of the negative electrode sheet is 1.0-2.2 g/cm³, and optionally, the compacted density of the negative electrode sheet is 1.2-1.8 g/cm³.

18. The negative electrode sheet according to any one of claims 1 to 17, wherein the thickness of the negative electrode sheet is 60-150 µm, and optionally, the thickness of the negative electrode sheet is 90-130 µm.

19. A battery cell, **characterized by** comprising the negative electrode sheet according to any one of claims 1 to 18.

20. The battery cell according to claim 19, further comprising a positive electrode sheet, wherein the positive electrode sheet comprises a positive electrode current collector and a positive electrode film layer provided on at least one side of the positive electrode current collector, and the positive electrode film layer comprises a positive electrode active material.

21. The battery cell according to claim 20, wherein the positive electrode active material comprises Liₓ(NiₐCo_{b}Mn_{c})_{1-d}M_{d}O_{2-y}A_{y}, M comprises at least one of Zr, Al, B, Ta, Mo, W, Nb, Sb, or La, 0.2<x≤1.2, 0.5≤a<1.0, 0≤b<0.5, 0≤c<1, 0≤d<1, and 0≤y<0.02.

22. A battery, **characterized by** comprising the battery cell according to any one of claims 19 to 21.

23. An electric device, **characterized by** comprising the battery according to claim 22.
